# FASCICULE DE BREVET EUROPEEN

(11) **EP 4 390 559 B1**
(45) Date de publication et mention de la délivrance du brevet: **15.04.2026**
(21) Numéro de dépôt: 22216156.4
(22) Date de dépôt: 22.12.2022
(51) Int. Cl.: G04B 19/12, A44C 27/00

(54) **PROCEDE DE REVETEMENT D'UNE PIECE D'HABILLAGE NOTAMMENT DU DOMAINE DE L'HORLOGERIE ET PIECE D'HABILLAGE REVETUE**
VERFAHREN ZUM BESCHICHTEN EINES VERKLEIDUNGSTEILS, INSBESONDERE DES UHRENBEREICHS, UND BESCHICHTETES VERKLEIDUNGSTEIL
METHOD FOR COATING A COVERING PART, IN PARTICULAR IN THE TIMEPIECE AREA, AND COATED COVERING PART

(43) Date de publication de la demande: 26.06.2024
(73) Titulaire: The Swatch Group Research and Development Ltd, 2074 Marin (CH)
(72) Inventeur: FRANÇOIS, Nicolas, 2000 Neuchâtel (CH); LESIK, Margarita, 1260 Nyon (CH); ODEH, Ahmad, 1020 Renens (CH)
(74) Mandataire: ICB SA

(56) Documents cités:
- EP-A1- 0 895 141
- WO-A1-2015/049913
- CN-A- 105 255 353
- CN-A- 106 496 844
- US-A- 5 750 241
- "LIA Handbook of Laser Materials Processing. Excerpts", 1 January 2001, MAGNOLIA PUBLISHING INC., ISBN: 978-0-941463-02-7, article READY JOHN F (ED): "LIA Handbook of Laser Materials Processing. Excerpts", pages: 1 - 45, XP055828852

## Description

### Domaine technique de l'invention

La présente invention concerne un procédé de revêtement d'une pièce d'habillage du domaine de l'horlogerie, des articles de mode, de la bijouterie et de la joaillerie.

### Arrière-plan technologique

La présente invention s'intéresse au domaine des pièces d'habillage du domaine de l'horlogerie, des articles de mode, de la bijouterie et de la joaillerie.

Dans ce qui suit, on entendra par « article de mode » les articles et accessoires d'habillement tels que les ceintures, les chaussures, les vêtements ainsi que les articles de lunetterie, les appareils électroniques, par exemple de téléphonie et tout autre objet décoratif.

En outre, le terme « pièce d'habillage » désigne, de façon communément admise dans les domaines précités, un composant visible pour un utilisateur et ayant une fonction décorative, c'est à dire contribuant à l'aspect visuel d'un objet.

Dans le domaine particulier de l'horlogerie, une catégorie de pièces d'habillage très connue est constituée par les cadrans de montre au-dessus desquels se déplacent notamment les aiguilles d'affichage de l'heure courante et qui reçoivent souvent des composants techniques tels que des heures index parfois formés de brillants ou bien des composants décoratifs, par exemple le logotype de la marque commerciale de la montre.

Ces cadrans sont très coûteux et également particulièrement fragiles. Or, de tels cadrans font l'objet de nombreuses manipulations lors de leur fabrication et lors de leur montage dans les boîtes de montres. Par conséquent, les risques de détériorer ces cadrans et de devoir les mettre au rebut sont importants, ce qui est difficilement acceptable du point de vue économique.

Il existait donc dans l'état de la technique un besoin pour protéger tout type de pièce d'habillage dans les domaines de l'horlogerie, des articles de mode, de la bijouterie et de la joaillerie contre les dégâts qui peuvent leur être occasionnés en cours de fabrication et d'assemblage.

Le document US5750241A présente une méthode de fabrication d'un cadran.

### Résumé de l'invention

La présente invention a pour but de pallier les inconvénients mentionnés ci-dessus ainsi que d'autres encore en proposant un procédé de revêtement de pièces d'habillage du domaine de l'horlogerie, des articles de mode, de la bijouterie et de la joaillerie permettant d'assurer une protection mécanique efficace de ces pièces d'habillage contre les agressions mécaniques extérieures auxquelles elles peuvent être soumises notamment en cours de production et lors de l'assemblage des montres.

A cet effet, la présente invention concerne un procédé selon la revendication 1 annexée.

Selon une forme spéciale d'exécution de l'invention, l'étape de surmoulage au moins partiel de la pièce d'habillage est réalisée par moulage ou par injection de la matière polymère plastique.

Selon une autre forme spéciale d'exécution de l'invention, le surmoulage au moins partiel de la pièce d'habillage comprend les étapes de :
- placer la pièce d'habillage dans un moule qui renferme le motif à répliquer dans la couche de surmoulage dans laquelle la pièce d'habillage est au moins en partie surmoulée ;
- fermer le moule ;
- injecter dans le moule la matière polymère plastique de façon que celle-ci vienne former la couche de surmoulage qui surmoule au moins partiellement la pièce d'habillage et que, simultanément, le motif soit répliqué dans cette couche de surmoulage ;
- ouvrir le moule et démouler la pièce d'habillage ainsi surmoulée.

Selon encore une autre forme spéciale d'exécution de l'invention, le moule est réalisé en un matériau silicone ou bien en un matériau métallique ou céramique.

Selon encore une autre forme spéciale d'exécution de l'invention, lorsqu'un moule est réalisé en un matériau silicone, ce moule silicone qui renferme le motif destiné à être répliqué dans la couche de surmoulage est réalisé au moyen d'un moule maître qui porte en positif le motif destiné à être répliqué dans la couche de surmoulage.

Selon encore une autre forme spéciale d'exécution de l'invention, lorsqu'un moule est réalisé en un matériau silicone, métallique ou céramique, le motif que renferme ce moule métallique ou céramique et qui est destiné à être répliqué dans la couche de surmoulage est réalisé à l'aide d'un dispositif à faisceau laser au moyen duquel on réalise en négatif dans le moule métallique ou céramique le motif destiné à être répliqué dans la couche de surmoulage.

Selon encore une autre forme spéciale d'exécution de l'invention, l'étape de surmoulage au moins partiel de la pièce d'habillage consiste à revêtir la pièce d'habillage d'une couche de surmoulage formée par aspersion de cette pièce d'habillage au moyen de la matière polymère plastique, puis à répliquer à chaud le motif dans la couche de surmoulage au moyen d'un outil réalisé à l'aide d'un dispositif à faisceau laser qui porte en négatif le motif à répliquer dans la couche de surmoulage.

Selon encore une autre forme spéciale d'exécution de l'invention, la couche de surmoulage est obtenue en déposant la matière polymère plastique selon une ou plusieurs applications successives.

Selon encore une autre forme spéciale d'exécution de l'invention, l'épaisseur de la couche de surmoulage est égale à 100 µm à plus ou moins 10% près.

Selon encore une autre forme spéciale d'exécution de l'invention, le dispositif à faisceau laser utilisé pour réaliser le motif comprend un faisceau laser émettant un faisceau de lumière cohérente à impulsions courtes dans la gamme des nanosecondes ou bien à impulsions ultra-courtes dans la gamme s'étendant entre les picosecondes et les femtosecondes.

Selon encore une autre forme spéciale d'exécution de l'invention, le faisceau laser émet des impulsions d'une durée réglable comprise entre 4 ns et 350 ns, de fréquence comprise entre 10 kHz et 1 MHz, et dont la puissance est égale ou proche de 40 W.

Selon encore une autre forme spéciale d'exécution de l'invention, lorsque le faisceau laser émet des impulsions ultrta-courtes, la fréquence des impulsions est comprise entre 100 kHz et 100 MHz.

Selon encore une autre forme spéciale d'exécution de l'invention, l'agent de couplage est du silane.

Selon encore une autre forme spéciale d'exécution de l'invention, l'agent de coloration noir a une valeur de clarté mesurée par colorimétrie inférieure ou égale à 10.

Selon encore une autre forme spéciale d'exécution de l'invention, l'agent de coloration noir est composé en pourcentages massiques à 95% de noir de carbone et à 5% de graphène.

L'invention concerne également une pièce d'habillage selon la revendication 16 annexée.

Selon une forme particulière d'exécution de l'invention, l'épaisseur de la couche de surmoulage est égale à 100 µm à plus ou moins 10% près.

Selon une autre forme d'exécution de l'invention, l'agent de couplage est du silane.

Selon encore une autre forme d'exécution de l'invention, l'agent de coloration noir a une valeur de clarté mesurée par colorimétrie inférieure ou égale à 10.

Selon encore une autre forme d'exécution de l'invention, l'agent de coloration noir est composé en pourcentages massiques à 95% de noir de carbone et à 5% de graphène.

Grâce à ces caractéristiques, la présente invention procure un procédé de revêtement d'une pièce d'habillage du domaine de l'horlogerie, des articles de mode, de la bijouterie et de la joaillerie qui, en enseignant de surmouler au moins en partie la pièce d'habillage au moyen d'une couche de surmoulage formée d'une matière polymère plastique, permet de prémunir une telle pièce d'habillage contre les dégâts qui sont susceptibles de lui être occasionnés en cours de fabrication et de montage.

Selon un autre avantage de la présente invention, le surmoulage de la pièce d'habillage au moyen d'une couche de matière polymère plastique est facile à mettre en œuvre, soit par aspersion d'une succession de fines couches de la matière polymère plastique, soit par moulage par injection de la matière plastique polymère plastique dans un moule.

Selon encore un autre avantage de la présente invention, la couche de surmoulage dont on revêt la pièce d'habillage est en outre mise à profit pour décorer cette pièce d'habillage, notamment en reproduisant dans cette couche de surmoulage l'empreinte d'un motif et, si souhaité, en donnant à cette couche de surmoulage un aspect particulier, par exemple mat, ou bien une couleur particulière, par exemple un noir profond. La couche de surmoulage remplit donc avantageusement deux fonctions : une fonction de protection mécanique et une fonction de décoration de la pièce d'habillage sur laquelle elle est surmoulée.

### Brève description des figures

D'autres caractéristiques et avantages de la présente invention ressortiront plus clairement de la description détaillée qui suit d'un exemple de mise en œuvre du procédé selon l'invention, cet exemple étant donné à titre purement illustratif et non limitatif seulement, en liaison avec le dessin annexé sur lequel :
- la figure 1 est une vue en perspective d'une pièce d'habillage du type d'un cadran pour une pièce d'horlogerie revêtu d'une couche de surmoulage ;
- la figure 2A est une vue schématique qui illustre l'étape de surmoulage de la pièce d'habillage par aspersion d'une matière polymère plastique ;
- la figure 2B est une vue schématique qui illustre l'étape de réplication à chaud d'un motif dans la couche de surmoulage au moyen d'un outil réalisé à l'aide d'un dispositif à faisceau laser qui porte en négatif le motif à surmouler dans la couche de surmoulage ;
- la figure 3 est une vue schématique qui illustre l'étape de surmoulage et de réplication du motif par injection de matière polymère plastique dans un moule ;
- la figure 4 est une vue schématique qui illustre un premier mode de fabrication d'un moule qui renferme le motif destiné à être répliqué dans la couche de surmoulage qui entoure au moins en partie la pièce d'habillage ;
- la figure 5 est une vue schématique qui illustre un second mode de fabrication d'un moule qui renferme le motif destiné à être répliqué dans la couche de surmoulage qui entoure au moins en partie la pièce d'habillage.

### Description détaillée de l'invention

La présente invention procède de l'idée générale inventive qui consiste à revêtir tout type de pièce d'habillage du domaine de l'horlogerie, des articles de mode, de la bijouterie et de la joaillerie d'une couche de surmoulage formée d'une matière polymère plastique, permettant ainsi de prémunir une telle pièce d'habillage contre les dégâts qui sont susceptibles de lui être occasionnés en cours de fabrication et de montage. Selon un autre de ses aspects, la présente invention propose également d'utiliser la couche de surmoulage pour décorer la pièce d'habillage revêtue de cette couche de surmoulage. En particulier, il est envisagé de donner à cette couche une couleur particulière, par exemple un noir profond ou bien un blanc réfléchissant. La couche de surmoulage selon l'invention remplit ainsi deux fonctions : protection mécanique et décorative de la pièce d'habillage. Ces deux fonctions sont remplies par la même couche de surmoulage qui est très facilement déposée par aspersion en fines couches de la matière polymère plastique, ou bien par moulage par injection de la matière plastique polymère plastique dans un moule.

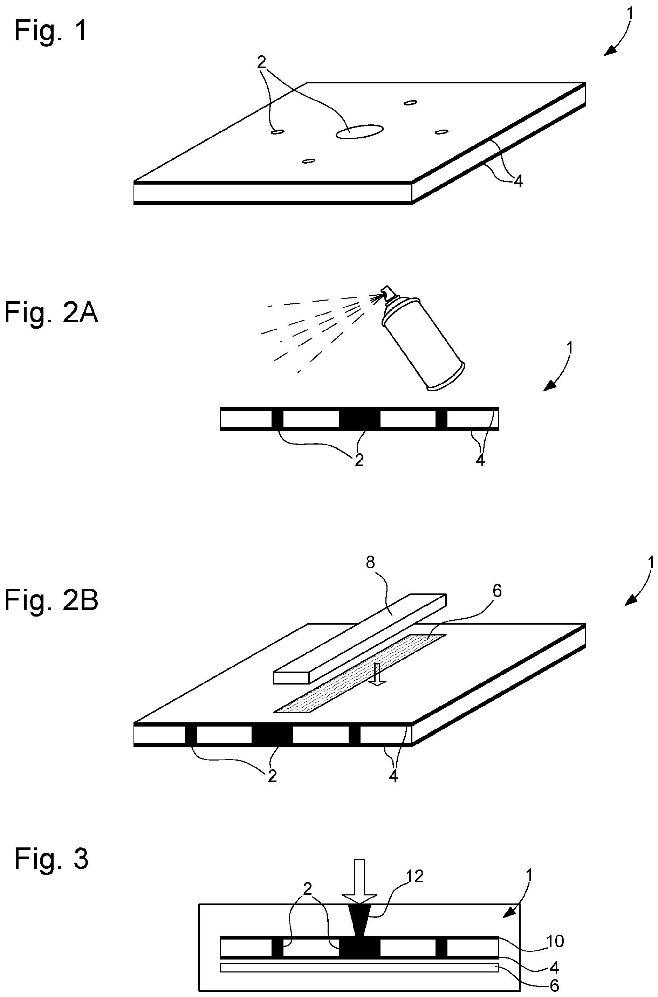

Dans la description qui suit, on supposera, à titre d'exemple purement illustratif et non limitatif seulement, que la pièce d'habillage est un cadran pour une pièce d'horlogerie telle qu'une montre-bracelet. Désigné dans son ensemble par la référence numérique générale 1, ce cadran est muni d'une pluralité de trous 2 notamment pour le passage des axes d'aiguilles des heures et des minutes (non représentées) pour l'affichage de l'heure courante ainsi que pour la fixation par exemple d'appliques pour former les index horaires (voir figure 1).

Selon l'invention, ce cadran 1 est revêtu au moins en partie d'une couche de surmoulage 4 formée d'une matière polymère plastique choisie dans le groupe formé par les polymères thermoplastiques de la famille des polyuréthanes et les polymères thermodurcissables de la famille des polymères époxydes, ou bien dans le groupe formé par les résines acryliques thermoplastiques.

La couche de surmoulage 4 a un rôle technique de protection mécanique. On met à profit la présence de cette couche de surmoulage 4 pour y répliquer un motif 6 à but purement décoratif ou bien également technique (reproduction du logotype de la marque commerciale de la pièce d'horlogerie par exemple). Outre l'aspect du motif 6 répliqué dans la couche de surmoulage 4, on peut également varier la couleur de la couche de surmoulage 4.

Selon une forme spéciale de mise en œuvre de l'invention, la couche de surmoulage 4 comprend en pourcentages massiques 78% de polymère plastique, 15% d'un agent de coloration noir de carbone, 5% de graphène et 2% d'un agent de couplage pour favoriser l'accroche de la couche de surmoulage 4 sur la pièce d'habillage 1.

Selon une autre forme spéciale d'exécution de l'invention, la couche de surmoulage 4 comprend en pourcentages massiques 30% de résine acrylique thermoplastique, 60% d'un solvant auquel sont ajoutés 1% d'un agent dispersant, 8% d'un agent de coloration noir et 1% d'un agent de couplage pour favoriser l'accroche de la couche de surmoulage 4 sur la pièce d'habillage 1.

L'agent de couplage est par exemple du silane. L'agent de coloration noir est composé en pourcentages massiques à 95% de noir de carbone et à 5% de graphène. L'agent de coloration noir a préférentiellement une valeur de clarté mesurée par colorimétrie inférieure ou égale à 10.

Selon une première forme de mise en œuvre du procédé de l'invention illustrée à la figure 2A, l'étape de surmoulage de la pièce d'habillage 1 consiste à revêtir la pièce d'habillage 1 d'une couche de surmoulage 4 formée par aspersion de cette pièce d'habillage 1 au moyen de la matière polymère plastique. Cette couche de surmoulage 4 est obtenue en déposant la matière polymère plastique selon une ou plusieurs applications successives. L'épaisseur de la couche de surmoulage 4 est égale à 100 µm à plus ou moins 10% près. Ainsi surmoulée, la pièce d'habillage 1 est protégée contre les risques de détériorations qui peuvent survenir lors de leur fabrication et lors de leur montage, par exemple dans les boîtes de montres lorsqu'il s'agit de cadrans.

La présence de la couche de surmoulage 4, tout d'abord prévue pour protéger les pièces d'habillage 1 contre les risques de détérioration, peut également être mise à profit pour réaliser dans cette couche de surmoulage 4 un motif tridimensionnel dont la fonction peut être purement décorative ou bien technique (par exemple reproduire dans l'épaisseur de la couche de surmoulage 4 le logotype de la marque commerciale de la pièce d'horlogerie). C'est pourquoi, comme schématiquement représenté à la figure 2B, une fois la pièce d'habillage 1 revêtue, on réplique à chaud un motif 6 dans la couche de surmoulage 4 au moyen d'un outil 8 du type d'un tampon qui peut, par exemple, être réalisé à l'aide d'un dispositif à faisceau laser qui porte en négatif le motif 6 à répliquer dans la couche de surmoulage 4.

Selon une seconde forme de mise en œuvre du procédé de l'invention illustrée à la figure 3, l'étape de surmoulage au moins partiel de la pièce d'habillage 1 comprend les étapes de :
- placer la pièce d'habillage 1 dans un moule 10 qui renferme le motif 6 à répliquer dans la couche de surmoulage 4 dans laquelle la pièce d'habillage 1 est au moins en partie surmoulée ;
- fermer le moule 10 ;
- injecter dans le moule 10 via un canal d'injection 12 la matière polymère plastique de façon que celle-ci vienne former la couche de surmoulage 4 qui surmoule au moins partiellement la pièce d'habillage 1 et que, simultanément, le motif 6 soit répliqué dans cette couche de surmoulage 4 ;
- ouvrir le moule 10 et démouler la pièce d'habillage 1 ainsi surmoulée.

Le moule 10 peut être indifféremment réalisé en un matériau silicone ou bien en un matériau métallique ou céramique. Le moule silicone sera plus particulièrement réservé pour la fabrication par moulage de petites séries de pièces d'habillage 1 surmoulées, tandis que l'on préfèrera utiliser un moule métallique ou céramique pour la fabrication par injection de grandes séries de pièces d'habillage 1 surmoulées.

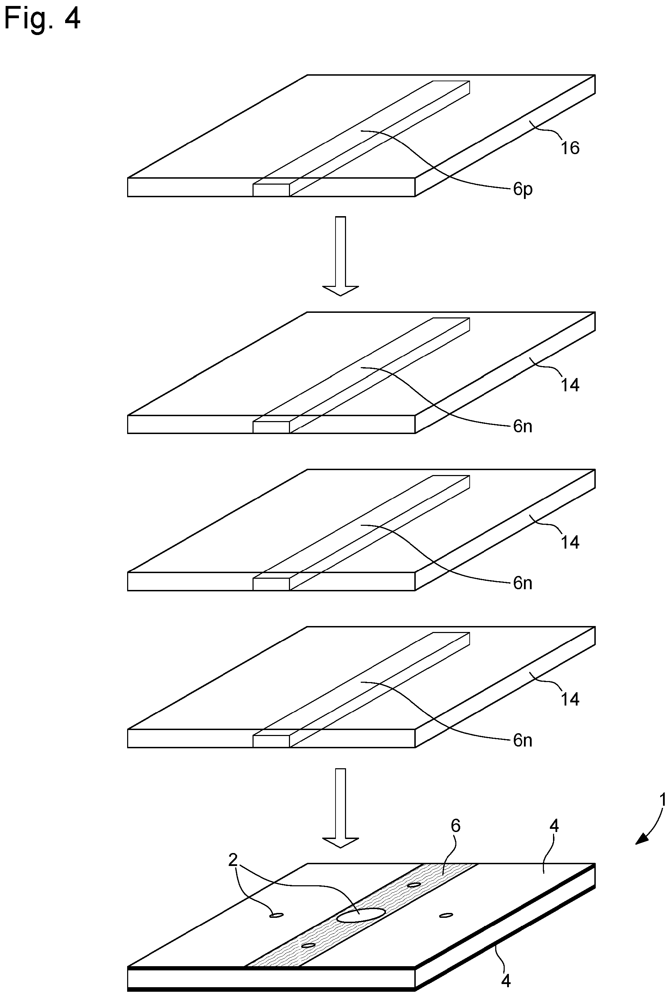

Lorsque le moule 10 est réalisé en un matériau silicone comme visible sur la figure 4, ce moule silicone 14 est réalisé souvent en plusieurs exemplaires à partir d'un moule maître 16. Le motif 6 que renferme ce moule maître 16 peut être réalisé par exemple à l'aide d'un dispositif à faisceau laser. Ce motif 6p est destiné à être répliqué dans le moule silicone 14 correspond au positif du motif 6 que l'on veut répliquer dans la couche de surmoulage 4. Le surmoulage de la pièce d'habillage 1 est obtenu par moulage de cette pièce d'habillage 1 dans un moule silicone.

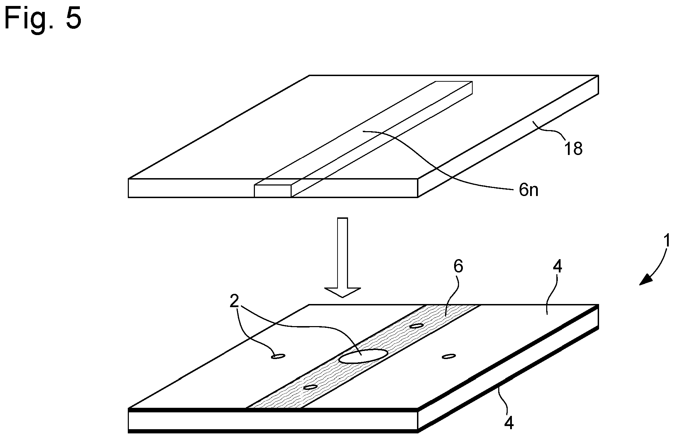

Lorsque le moule 10 est réalisé en un matériau métallique ou céramique, le motif 6 que renferme le moule métallique 18 et qui est destiné à être répliqué directement dans la couche de surmoulage 4 est réalisé par exemple à l'aide d'un dispositif à faisceau laser au moyen duquel on réalise en négatif dans une paroi intérieure du moule métallique 18 le motif 6n destiné à être répliqué dans la couche de surmoulage 4 (voir figure 5).

Le dispositif à faisceau laser utilisé pour réaliser le motif 6 à l'intérieur du moule métallique 18 comprend un faisceau laser émettant un faisceau de lumière cohérente à impulsions courtes dans la gamme des nanosecondes ou bien à impulsions ultra-courtes dans la gamme s'étendant entre les picosecondes et les femtosecondes.

Le faisceau laser émet des impulsions d'une durée réglable comprise entre 4 ns et 350 ns, de fréquence comprise entre 10 kHz et 1 MHz, et dont la puissance est égale ou proche de 40 W.

Lorsque le faisceau laser émet des impulsions ultra-courtes, la fréquence des impulsions est comprise entre 100 kHz et 100 MHz.

Il va de soi que la présente invention n'est pas limitée au mode de mise en œuvre qui vient d'être décrit, et que diverses modifications et variantes simples peuvent être envisagées sans sortir du cadre de l'invention tel que défini par les revendications annexées. On notera en particulier que, dans le cas où la pièce d'habillage est un cadran de montre, on veillera de préférence à ce que la tranche de ce cadran de montre ne soit pas recouvert de la couche de surmoulage 4, ceci dans le but de faciliter le montage de ce cadran de montre dans la boîte de montre. Plus généralement, lorsqu'on surmoule une pièce d'habillage donnée, on peut prendre des mesures pour que certaines surfaces de cette pièce d'habillage ne soit pas recouvertes par la couche de surmoulage. On notera de même que, dans le cas où le procédé de l'invention est appliqué à des pièces d'habillage ayant pour vocation à venir en contact avec la peau d'un utilisateur, la couche de surmoulage procure un grand confort au porté.

### Nomenclature

- 1.: Pièce d'habillage
- 2.: Trous
- 4.: Couche de surmoulage
- 6.: Motif
- 6p.: Motif positif
- 6n.: Motif négatif
- 8.: Outil
- 10.: Moule
- 12.: Canal d'injection
- 14.: Moule silicone
- 16.: Moule maître
- 18.: Moule métallique

## Revendications

1. Procédé de revêtement d'une pièce d'habillage (1) du domaine de l'horlogerie, des articles de mode, de la bijouterie et de la joaillerie, ce procédé de revêtement comprenant les étapes de :
- surmouler au moins en partie la pièce d'habillage (1) au moyen d'une couche de surmoulage (4) formée d'une matière polymère plastique choisie dans le groupe formé par les polymères thermoplastiques de la famille des polyuréthanes et les polymères thermodurcissables de la famille des polymères époxydes, ou bien dans le groupe formé par les résines acryliques thermoplastiques,
ce procédé comprenant encore l'étape de réplication d'un motif (6) dans la couche de surmoulage (4) dans laquelle la pièce d'habillage (1) est au moins en partie surmoulée dans lequel la couche de surmoulage (4) a un rôle technique de protection mécanique et décoratif le cas échéant,
**caractérisé en ce que** la couche de surmoulage (4) comprend en pourcentages massiques,
- soit 78% de polymère plastique, 15% d'un agent de coloration noir de carbone, 5% de graphène et 2% d'un agent de couplage pour favoriser l'accroche de la couche de surmoulage (4) sur la pièce d'habillage (1),
- soit 30% de résine acrylique thermoplastique, 60% d'un solvant auquel sont ajoutés 1% d'un agent dispersant, 8% d'un agent de coloration noir et 1% d'un agent de couplage pour favoriser l'accroche de la couche de surmoulage (4) sur la pièce d'habillage (1).

2. Procédé de revêtement d'une pièce d'habillage selon la revendication 1, **caractérisé en ce que** l'étape de surmoulage au moins partiel de la pièce d'habillage (1) est réalisée par moulage ou par injection de la matière polymère plastique.

3. Procédé de revêtement d'une pièce d'habillage selon la revendication 2, **caractérisé en ce que** le surmoulage au moins partiel de la pièce d'habillage (1) comprend les étapes de :
- placer la pièce d'habillage (1) dans un moule qui renferme le motif à répliquer dans la couche de surmoulage (4) dans laquelle la pièce d'habillage (1) est au moins en partie surmoulée ;
- fermer le moule ;
- injecter dans le moule la matière polymère plastique de façon que celle-ci vienne former la couche de surmoulage (4) qui surmoule au moins partiellement la pièce d'habillage (1) et que, simultanément, le motif soit répliqué dans cette couche de surmoulage (4) ;
- ouvrir le moule et démouler la pièce d'habillage (1) ainsi surmoulée.

4. Procédé de revêtement d'une pièce d'habillage selon la revendication 3, **caractérisé en ce que** le moule est réalisé en un matériau silicone ou bien en un matériau métallique ou céramique.

5. Procédé de revêtement d'une pièce d'habillage selon la revendication 4, **caractérisé en ce que** lorsqu'un moule est réalisé en un matériau silicone, ce moule silicone (14) qui renferme le motif (6) destiné à être répliqué dans la couche de surmoulage (4) est réalisé au moyen d'un moule maître (16) qui porte en positif le motif (6) destiné à être répliqué dans la couche de surmoulage (4).

6. Procédé de revêtement d'une pièce d'habillage selon l'une des revendications 4 et 5, **caractérisé en ce que** lorsqu'un moule est réalisé en un matériau silicone, métallique ou céramique, le motif (6) que renferme ce moule métallique ou céramique (18) et qui est destiné à être répliqué dans la couche de surmoulage (4) est réalisé à l'aide d'un dispositif à faisceau laser au moyen duquel on réalise en négatif dans le moule métallique ou céramique (18) le motif (6) destiné à être répliqué dans la couche de surmoulage (4).

7. Procédé de revêtement d'une pièce d'habillage selon la revendication 1, **caractérisé en ce que** l'étape de surmoulage au moins partiel de la pièce d'habillage (1) consiste à revêtir la pièce d'habillage (1) d'une couche de surmoulage (4) formée par aspersion de cette pièce d'habillage (1) au moyen de la matière polymère plastique, puis à répliquer à chaud le motif (6) dans la couche de surmoulage (4) au moyen d'un outil réalisé à l'aide d'un dispositif à faisceau laser qui porte en négatif le motif (6) à répliquer dans la couche de surmoulage (4).

8. Procédé de revêtement d'une pièce d'habillage selon la revendication 7, **caractérisé en ce que** la couche de surmoulage (4) est obtenue en déposant la matière polymère plastique selon une ou plusieurs applications successives.

9. Procédé de revêtement d'une pièce d'habillage selon la revendication 8, **caractérisé en ce que** l'épaisseur de la couche de surmoulage (4) est égale à 100 µm à plus ou moins 10% près.

10. Procédé de revêtement d'une pièce d'habillage selon l'une des revendications 6 à 9, **caractérisé en ce que** le dispositif à faisceau laser utilisé pour réaliser le motif (6) comprend un faisceau laser émettant un faisceau de lumière cohérente à impulsions courtes dans la gamme des nanosecondes ou bien à impulsions ultra-courtes dans la gamme s'étendant entre les picosecondes et les femtosecondes.

11. Procédé de revêtement d'une pièce d'habillage selon la revendication 10, **caractérisé en ce que** le faisceau laser émet des impulsions d'une durée réglable comprise entre 4 ns et 350 ns, de fréquence comprise entre 10 kHz et 1 MHz, et dont la puissance est égale ou proche de 40 W.

12. Procédé de revêtement d'une pièce d'habillage selon la revendication 10, **caractérisé en ce que** lorsque le faisceau laser émet des impulsions ultrta-courtes, la fréquence des impulsions est comprise entre 100 kHz et 100 MHz.

13. Procédé de revêtement d'une pièce d'habillage selon la revendication 1, **caractérisé en ce que** l'agent de couplage est du silane.

14. Procédé de revêtement d'une pièce d'habillage selon la revendication 1, **caractérisé en ce que** l'agent de coloration noir a une valeur de clarté mesurée par colorimétrie inférieure ou égale à 10.

15. Procédé de revêtement d'une pièce d'habillage selon la revendication 14, **caractérisé en ce que** l'agent de coloration noir est composé en pourcentages massiques à 95% de noir de carbone et à 5% de graphène.

16. Pièce d'habillage (1) du domaine de l'horlogerie, des articles de mode, de la bijouterie et de la joaillerie, cette pièce d'habillage (1) étant au moins en partie revêtue d'une couche de surmoulage (4) formée d'une matière polymère plastique choisie dans le groupe formé par les polymères thermoplastiques de la famille des polyuréthanes et les polymères thermodurcissables de la famille des polymères époxydes, ou bien dans le groupe formé par les résines acryliques thermoplastiques, la couche de surmoulage (4) comprenant la réplication d'un motif (6) décoratif et/ou technique, la couche de surmoulage (4) étant formée d'une ou plusieurs couches de polymère plastique, **caractérisée en ce que** la couche de surmoulage (4) comprend en pourcentages massiques :
- soit : 78% de polymère plastique, 15% d'un agent de coloration noir de carbone, 5% de graphène et 2% d'un agent de couplage pour favoriser l'accroche de la couche de surmoulage (4) sur la pièce d'habillage (1),
- soit : 30% de résine acrylique thermoplastique, 60% d'un solvant auquel sont ajoutés 1% d'un agent dispersant, 8% d'un agent de coloration noir et 1% d'un agent de couplage pour favoriser l'accroche de la couche de surmoulage (4) sur la pièce d'habillage (1).

17. Pièce d'habillage (1) selon la revendication 16, **caractérisée en ce que** l'agent de couplage est du silane.

18. Pièce d'habillage (1) selon la revendication 16, **caractérisée en ce que** l'agent de coloration noir a une valeur de clarté mesurée par colorimétrie inférieure ou égale à 10.

19. Pièce d'habillage (1) selon la revendication 18 **caractérisée en ce que** l'agent de coloration noir est composé en pourcentages massiques à 95% de noir de carbone et à 5% de graphène.

## Patentansprüche

1. Verfahren zur Verkleidung eines Verkleidungsteils (1) aus dem Bereich Uhrmacherei, Modeartikel, "Bijouterie" und Juwelierskunst, wobei dieses Verfahren zur Verkleidung folgende Schritte umfasst:
- das Umspritzen mindestens eines Teil des Verkleidungsteils (1) mit einer Umspritzschicht (4), die aus einem Kunststoff-Polymermaterial gebildet ist, das ausgewählt ist aus der Gruppe der thermoplastischen Polymere der Polyurethanfamilie und der duroplastischen Polymere der Epoxidpolymerfamilie oder aus der Gruppe der thermoplastischen Acrylharze.
wobei dieses Verfahren ferner den Schritt der Replikation eines Motivs (6) in der Umspritzschicht (4) umfasst, wobei das Verkleidungsteil (1) zumindest teilweise umspritzt ist, wobei die Umspritzschicht (4) gegebenenfalls eine technische Funktion des mechanischen Schutzes und der Dekoration erfüllt, **dadurch gekennzeichnet, dass**
wobei die Umspritzschicht (4) in Gew.-% umfasst:
- entweder 78 % Kunststoffpolymer, 15 % eines Schwarzruß-Farbmittels, 5 % Graphen und 2 % eines Haftvermittlers zur Verbesserung der Haftung der Umspritzschicht (4) auf dem Verkleidungsteil (1) umfasst,
- oder 30 % thermoplastisches Acrylharz, 60 % eines Lösungsmittels, dem 1% eines Dispergiermittels, 8 % eines schwarzen Farbmittels und 1% eines Haftvermittlers zugesetzt sind, um die Haftung der Umspritzschicht (4) auf dem Verkleidungsteil (1) zu verbessern.

2. Verfahren zum Beschichten eines Verkleidungsteils nach Anspruch 1, **dadurch gekennzeichnet, dass** der Schritt des zumindest teilweisen Umspritzens des Verkleidungsteils (1) durch Formgießen oder durch Einspritzen des Kunststoff-Polymermaterials durchgeführt wird.

3. Verfahren zum Beschichten eines Verkleidungsteils nach Anspruch 2, **dadurch gekennzeichnet, dass** das zumindest teilweise Umspritzen des Verkleidungsteils (1) folgende Schritte umfasst:
- Platzieren des Verkleidungsteils (1) in eine Form, die das Motiv umfasst, das in der Umspritzschicht (4), mit der das Verkleidungsteil (1) zumindest teilweise umspritzt wird, enthalten ist;
- Schließen der Form;
- Einspritzen des Kunststoff-Polymermaterials in die Form, sodass dieses die Umspritzschicht (4) bildet, welche das Verkleidungsteil (1) zumindest teilweise umspritzt, und wobei gleichzeitig das Motiv in dieser Umspritzschicht (4) repliziert wird;
- Öffnen der Form und Entfernen des Verkleidungsteils (1) in seinem so umspritzten Zustand aus der Form.

4. Verfahren zum Beschichtung eines Verkleidungsstücks nach Anspruch 3, **dadurch gekennzeichnet, dass** die Form aus einem Silikonmaterial oder aus einem Metall- oder Keramikmaterial hergestellt ist.

5. Verfahren zum Beschichten eines Verkleidungsteils nach Anspruch 4, **dadurch gekennzeichnet, dass**, wenn eine Form aus einem Silikonmaterial hergestellt ist, diese Silikonform (14), die das Motiv (6) enthält, das in der Umspritzschicht (4) repliziert werden soll, mittels einer Urform (16) hergestellt wird, welche das Motiv (6), das in der Umspritzschicht (4) repliziert werden soll, positiv trägt.

6. Verfahren zum Beschichten eines Verkleidungsteils nach einem der Ansprüche 4 und 5, **dadurch gekennzeichnet, dass**, wenn eine Form aus einem Silikon-, Metall- oder Keramikmaterial hergestellt ist, das Motiv (6), das diese Metall- oder Keramikform (18) enthält und das in der Umspritzschicht (4) repliziert werden soll, mittels einer Laserstrahlvorrichtung erzeugt wird, mit der das für die Replikation in der Umspritzschicht (4) bestimmte Motiv (6) negativ in die Metall- oder Keramikform (18) aufgenommen wird.

7. Verfahren zum Beschichten eines Verkleidungsteils nach Anspruch 1, **dadurch gekennzeichnet, dass** der Schritt des zumindest teilweisen Umspritzens des Verkleidungsteils (1) darin besteht, das Verkleidungsteil (1) mit einer Umspritzschicht (4) zu versehen, die durch Besprühen dieses Verkleidungsteils (1) mit dem Kunststoff-Polymermaterial gebildet wird, und anschließend das Motiv (6) mittels eines mit einer Laserstrahlvorrichtung hergestellten Werkzeugs, das das in der Umspritzschicht (4) zu replizierende Motiv (6) negativ trägt, heiß in die Umspritzschicht (4) zu replizieren.

8. Verfahren zum Beschichten eines Verkleidungsteils nach Anspruch 7, **dadurch gekennzeichnet, dass** die Umspritzschicht (4) durch das Aufbringen des Kunststoff-Polymermaterials in einer oder mehreren aufeinanderfolgenden Anwendungen erhalten wird.

9. Verfahren zur Beschichtung eines Verkleidungsstücks nach Anspruch 8, **dadurch gekennzeichnet, dass** die Dicke der Umspritzschicht (4) 100 µm beträgt, mit einer Toleranz von plus oder minus 10 %.

10. Verfahren zum Beschichten eines Verkleidungsstücks nach einem der Ansprüche 6 bis 9, **dadurch gekennzeichnet, dass** das zur Herstellung des Motivs (6) verwendete Laserstrahlgerät einen Laserstrahl umfasst, der ein kohärentes Lichtbündel mit kurzen Impulsen im Nanosekundenbereich oder ultrakurzen Impulsen im Bereich zwischen Pikosekunden und Femtosekunden abgibt.

11. Verfahren zum Beschichten eines Verkleidungsstücks nach Anspruch 10, **dadurch gekennzeichnet, dass** der Laserstrahl Impulse mit einer einstellbaren Dauer zwischen 4 ns und 350 ns, mit einer Frequenz zwischen 10 kHz und 1 MHz und mit einer Leistung von gleich oder annähernd 40 W abgibt.

12. Verfahren zur Beschichtung eines Verkleidungsstücks nach Anspruch 10, **dadurch gekennzeichnet, dass**, wenn der Laserstrahl Ultrakurzimpulse abgibt, die Impulsfrequenz zwischen 100 kHz und 100 MHz liegt.

13. Verfahren zum Beschichten eines Verkleidungsstücks nach dem Anspruch 1, **dadurch gekennzeichnet, dass** das Kopplungsmittel Silan ist.

14. Verfahren zum Beschichten eines Verkleidungsteils nach Anspruch 1, **dadurch gekennzeichnet, dass** das schwarze Färbemittel einen Klarheitswert hat, dessen mittels Kolorimetrie gemessener Wert kleiner oder gleich 10 ist.

15. Verfahren zum Beschichten eines Verkleidungsteils nach Anspruch 14, **dadurch gekennzeichnet, dass** das schwarze Farbmittel zu 95 Gew.-% aus Ruß und zu 5 Gew.-% aus Graphen besteht.

16. Verkleidungsteil (1) aus dem Bereich der Uhrmacherei, der Modeartikel, der Bijouterie und der Juwelierwaren, wobei dieses Verkleidungsteil (1) mindestens teilweise mit einer Umspritzschicht (4) versehen ist, die aus einem Kunststoff-Polymermaterial besteht, das aus der Gruppe der thermoplastischen Polymere der Polyurethan-Familie und der wärmehärtbaren Polymere der Epoxid-Familie oder aus der Gruppe der thermoplastischen Acrylharze ausgewählt ist, wobei die Umspritzschicht (4) die Replikation eines dekorativen und/oder technischen Motivs (6) umfasst und wobei die Umspritzschicht (4) aus einer oder mehreren Schichten Kunststoffpolymer besteht, **dadurch gekennzeichnet, dass** die Umspritzschicht (4) Folgendes in Gew.-% umfasst:
- entweder: 78 % Kunststoffpolymer, 15 % eines Schwarzruß-Farbmittels, 5 % Graphen und 2% eines Haftvermittlers zur Verbesserung der Haftung der Umspritzschicht (4) auf dem Verkleidungsteil (1),
- oder: 30 % thermoplastisches Acrylharz, 60 % eines Lösungsmittels, dem 1% eines Dispergiermittels, 8 % eines schwarzen Farbmittels und 1% eines Haftvermittlers zugesetzt sind, um die Haftung der Umspritzschicht (4) auf dem Verkleidungsteil (1) zu verbessern.

17. Verkleidungsstück (1) nach Anspruch 16, **dadurch gekennzeichnet, dass** das Kopplungsmittel Silan ist.

18. Verkleidungsteil (1) nach Anspruch 16, **dadurch gekennzeichnet, dass** das schwarze Färbemittel einen mittels Kolorimetrie gemessenen Klarheitswert von kleiner oder gleich 10 hat.

19. Verkleidungsteil (1) nach Anspruch 18, **dadurch gekennzeichnet, dass** das schwarze Färbemittel aus 95 Gew.-% Kohlenstoffschwarz und 5 Gew.-% Graphen besteht.

## Claims

1. A method for plating an external part (1) used in the fields of horology, fashion, jewellery and fine jewellery, this plating method comprising the steps of:
- at least partially overmoulding the external part (1) with an overmoulding layer (4) made of a plastic polymer material chosen from the group consisting of thermoplastic polymers in the polyurethane family and thermosetting polymers in the epoxy polymer family, or from the group consisting of thermoplastic acrylic resins,
this method also comprising the step of replicating a pattern (6) in the overmoulding layer (4) in which the external part (1) is at least partially overmoulded, in which the overmoulding layer (4) has a technical role of mechanical and decorative protection where appropriate,
**characterised in that** the overmoulding layer (4) comprises, in mass percentages,
- either 78% of plastic polymer, 15% of a carbon black colouration agent, 5% of graphene and 2% of a bonding agent to promote adhesion of the overmoulding layer (4) to the external part (1),
- or 30% of thermoplastic acrylic resin, 60% of a solvent to which are added 1% of a dispersing agent, 8% of a black colouration agent and 1% of a bonding agent to promote adhesion of the overmoulding layer (4) to the external part (1).

2. The method for plating an external part according to claim 1, **characterised in that** the step of at least partially overmoulding the external part (1) is carried out by moulding or by injecting the plastic polymer material.

3. The method for plating an external part according to claim 2, **characterised in that** at least partially overmoulding the external part (1) comprises the steps of:
- placing the external part (1) in a mould which encloses the pattern to be replicated in the overmoulding layer (4) in which the external part (1) is at least partially overmoulded;
- closing the mould;
- injecting the plastic polymer material into the mould so that it forms the overmoulding layer (4) which at least partially overmoulds the external part (1) and so that the pattern is simultaneously replicated in this overmoulding layer (4);
- opening the mould and removing the overmoulded external part (1).

4. The method for plating an external part according to claim 3, **characterised in that** the mould is made either of a silicone material or of a metallic or ceramic material.

5. The method for plating an external part according to claim 4, **characterised in that** when a mould is made of a silicone material, this silicone mould (14) which encloses the pattern (6) to be replicated in the overmoulding layer (4) is made using a master mould (16) which is a positive mould of the pattern (6) to be replicated in the overmoulding layer (4).

6. The method for plating an external part according to any of claims 4 and 5, **characterised in that** when a mould is made of a silicone, metallic or ceramic material, the pattern (6) enclosed in this metallic or ceramic mould (18) and which is to be replicated in the overmoulding layer (4) is produced using a laser device with which the pattern (6) to be replicated in the overmoulding layer (4) is produced as a negative in the metallic or ceramic mould (18).

7. The method for plating an external part according to claim 1, **characterised in that** the step of at least partially overmoulding the external part (1) consists in plating the external part (1) with an overmoulding layer (4) formed by spraying this external part (1) with the plastic polymer material, then in hot replicating the pattern (6) in the overmoulding layer (4) using a tool made with a laser device and carrying a negative of the pattern (6) to be replicated in the overmoulding layer (4).

8. The method for plating an external part according to claim 7, **characterised in that** the overmoulding layer (4) is obtained by depositing the plastic polymer material in one or more successive applications.

9. The method for plating an external part according to claim 8, **characterised in that** the thickness of the overmoulding layer (4) is equal to 100 µm to within plus or minus 10%.

10. The method for plating an external part according to any of claims 6 to 9, **characterised in that** the laser device used to produce the pattern (6) comprises a laser beam emitting a coherent light beam with short pulses in the nanosecond range or with ultra-short pulses ranging from picoseconds to femtoseconds.

11. The method for plating an external part according to claim 10, **characterised in that** the laser beam emits pulses with an adjustable duration comprised between 4 ns and 350 ns, at a frequency comprised between 10 kHz and 1 MHz, and with a power equal to or approaching 40 W.

12. The method for plating an external part according to claim 10, **characterised in that** when the laser beam emits ultra-short pulses, the pulse frequency is comprised between 100 kHz and 100 MHz.

13. The method for plating an external part according to claim 1, **characterised in that** the bonding agent is silane.

14. The method for plating an external part according to claim 1, **characterised in that** the black colouration agent has a lightness value, measured by colorimetry, of less than or equal to 10.

15. The method for plating an external part according to claim 14, **characterised in that** the black colouration agent is composed of 95% by mass of carbon black and 5% by mass of graphene.

16. An external part (1) used in the fields of horology, fashion, jewellery and fine jewellery, this external part (1) being at least partially plated with an overmoulding layer (4) made of a plastic polymer material chosen from the group consisting of thermoplastic polymers in the polyurethane family and thermosetting polymers in the epoxy polymer family, or from the group consisting of thermoplastic acrylic resins, the overmoulding layer (4) comprising the replication of a decorative and/or technical pattern (6), the overmoulding layer (4) being made of one or more layers of plastic polymer,
**characterised in that** the overmoulding layer (4) comprises, in mass percentages:
- either 78% of plastic polymer, 15% of a carbon black colouration agent, 5% of graphene and 2% of a bonding agent to promote adhesion of the overmoulding layer (4) to the external part (1),
- or 30% of thermoplastic acrylic resin, 60% of a solvent to which are added 1% of a dispersing agent, 8% of a black colouration agent and 1% of a bonding agent to promote adhesion of the overmoulding layer (4) to the external part (1).

17. The external part (1) according to claim 16, **characterised in that** the bonding agent is silane.

18. The external part (1) according to claim 16, **characterised in that** the black colouration agent has a lightness value, measured by colorimetry, of less than or equal to 10.

19. The external part (1) according to claim 18, **characterised in that** the black colouration agent is composed of 95% by mass of carbon black and 5% by mass of graphene.
